# DEMANDE DE BREVET EUROPEEN

(11) **EP 1 677 486 A1**
(43) Date de publication de la demande: **05.07.2006**
(21) Numéro de dépôt: 05292804.1
(22) Date de dépôt: 27.12.2005
(51) Int. Cl.: H04L 29/06

(54) **Procédé d'authentification d'un terminal**

(30) Priorité: 03.01.2005 FR 0500016
(71) Demandeur: FRANCE TELECOM, 75015 Paris (FR)
(72) Inventeur: Gombert, Anne, 75014 Paris (FR); Bel, Vincent, 75015 Paris (FR); Arditti, David, 92140 Clamart (FR)
(74) Mandataire: Burbaud, Eric

(57) **Abrégé**

Un procédé d'authentification d'un terminal (T1) comprenant un module de connexion (1), comprend une étape d'envoi de données d'authentification à une entité serveur (S). Ces données d'authentification comprennent un code d'identification et un secret. Ce procédé permet d'assurer l'unicité de la connexion de ce terminal (T1) en étant caractérisé en ce que le code d'identification, généré par le module de connexion (1) comprend des données de caractéristiques matérielles intrinsèques propres au terminal (T1).

## Description

La présente invention se rapporte à un procédé d'authentification de terminaux, notamment des terminaux reliés à un réseau du type intranet, Internet ou autre.

Plus particulièrement, l'invention concerne un procédé d'authentification d'un terminal pour valider une connexion du terminal à une entité serveur, dans lequel un module de connexion compris dans le terminal transmet des données d'authentification générées à l'aide d'au moins un code d'identification du terminal et d'un secret.

Un tel procédé est connu, notamment pour contrôler l'accès de terminaux ou d'utilisateurs à des entités serveurs. Pour autoriser l'accès d'un terminal sur une entité serveur, un module de connexion, par exemple un logiciel compris dans le terminal envoie à un serveur d'accès du type RADIUS des données d'authentification comprenant des données d'identification du terminal et un secret, comme un mot de passe par exemple. Le serveur d'accès, avant d'accorder la connexion, vérifie d'une part, qu'un terminal ayant le même identifiant n'est pas déjà connecté, et d'autre part, que le secret est valide.

Cependant, un tel serveur d'accès doit, pour être efficace, être unique. Par conséquent, le nombre de transferts de données d'identification à ce serveur d'accès est très élevé, ce qui impose un serveur assez rapide pour gérer dans un temps raisonnable l'ensemble des demandes d'accès. Un tel serveur d'accès est donc très coûteux. En outre, si les terminaux sont éloignés géographiquement de ce serveur d'accès, le temps de connexion peut être très long.

Un but de la présente invention est de pallier ces différents inconvénients.

L'invention a notamment pour but de fournir un procédé d'authentification d'un terminal, qui assure l'unicité de la connexion d'un terminal, sans requérir d'installation coûteuse, telle un serveur d'accès RADIUS.

L'invention propose ainsi un procédé d'authentification d'un terminal pour valider une connexion du terminal à une entité serveur, dans lequel un module de connexion compris dans le terminal transmet des données d'authentification générées à l'aide d'au moins un code d'identification du terminal et d'un secret, caractérisé en ce que le module de connexion établit le code d'identification sur la base de données de caractéristiques matérielles intrinsèques propres au terminal. Avantageusement, la connexion étant sujette à des clauses d'abonnement, le code d'identification comprend en outre une information sur les clauses de l'abonnement.

D'autre part, l'invention concerne un procédé d'enregistrement d'un terminal, pour autoriser la connexion dudit terminal à au moins une entité serveur, dans lequel le terminal comprend un module de connexion, caractérisé en ce que ledit module de connexion du terminal fournit à une entité d'enregistrement des données sur les caractéristiques matérielles intrinsèques propres audit terminal, et en ce que l'entité d'enregistrement fournit à l'entité serveur un code d'authentification du terminal comprenant un secret et un code d'identification du terminal établi sur la base desdites données de caractéristiques matérielles intrinsèques.

Ainsi, en fournissant un code d'identification sur la base de caractéristiques matérielles intrinsèques propres au terminal par l'intermédiaire d'un module de connexion, ce procédé permet de garantir qu'un même code d'identification ne peut être utilisé que par un terminal. De plus, en dehors du module de connexion qui peut être un logiciel installé sur chaque terminal, ce procédé ne nécessite pas d'installations coûteuses telles un serveur RADIUS, ou encore l'utilisation de cartes à puces pour chaque utilisateur.

L'invention concerne de plus un module de connexion adapté pour mettre en oeuvre ce procédé, un produit programme d'ordinateur pouvant former ce module, une entité d'enregistrement pour mettre en oeuvre le procédé d'enregistrement et un produit programme d'ordinateur pour former des moyens d'enregistrement d'une entité d'enregistrement.

D'autres particularités et avantages de la présente invention apparaîtront dans la description ci-après d'exemples de réalisation non limitatifs, en référence aux dessins annexés, dans lesquels :
- la figure 1 est un schéma synoptique représentant un réseau dans lequel un procédé d'enregistrement conforme à l'invention est mis en oeuvre ;
- la figure 2 est un schéma synoptique représentant un réseau dans lequel un procédé d'authentification de connexion conforme à l'invention est mis en oeuvre.

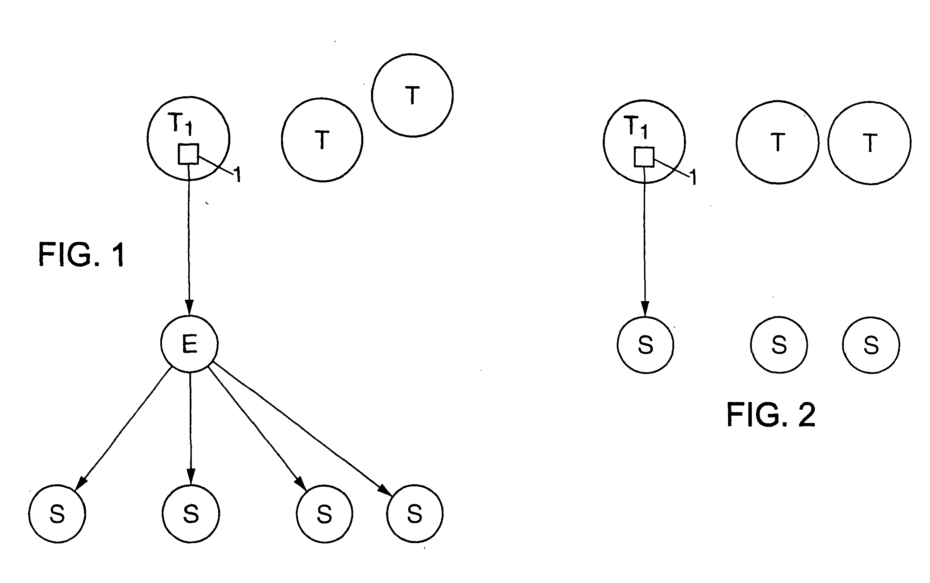

Conformément à l'invention, sur la figure 1, une pluralité de terminaux T est connectée à un réseau, par exemple du type Internet. Pour que le terminal T1 puisse avoir accès aux services fournis par des entités serveurs S, celui-ci doit d'abord être enregistré auprès d'une entité unique d'enregistrement E. Pour cela, un module de connexion 1 présent sur le terminal T1 envoie des données de caractéristiques matérielles intrinsèques du terminal T1. Ainsi, le module de connexion 1 peut fournir à l'entité d'enregistrement E des données, telles qu'un numéro de série du processeur, ou une adresse physique de la carte réseau ou toute autre caractéristique matérielle du terminal T1. Il importe que ces données soient différentes pour chaque terminal T, et qu'elles soient sensiblement invariables au cours du temps en ce qui concerne un terminal.

L'entité d'enregistrement E peut alors appliquer à ces données matérielles une fonction de condensation afin de créer un code d'identification du terminal T1. Une fois le code d'identification du terminal T1 généré, celui-ci est envoyé à la pluralité d'entités serveurs S, accompagné d'un secret. Ce secret peut être un mot de passe, ou une clef d'un système de cryptographie symétrique, ou encore une clef publique d'un système de cryptographie asymétrique. Si ce secret est un mot de passe entré par un utilisateur, celui-ci peut être préalablement fourni par le module de connexion 1 du terminal T1 avec les données matérielles intrinsèques du terminal. Cependant, si ce secret est une clef d'un système de cryptographie symétrique, cette clef peut être envoyée à la pluralité d'entités serveurs et au terminal T1. Dans le cas d'une clef d'un système cryptographie asymétrique, la clef privée est envoyée au module de connexion 1 du terminal T1, qui la stocke en mémoire sur le terminal, tandis que la clef publique est envoyée aux entités serveurs.

Ainsi, le terminal T1 a été enregistré auprès de l'ensemble des entités serveurs S. Le code d'identification du terminal T1 n'est jamais renvoyé au terminal T1. Il est donc nécessaire au module de connexion 1 de recréer son code d'identification à partir des données intrinsèques matérielles propres dudit terminal T1 lors de chaque connexion et d'algorithmes identiques à ceux de l'entité d'enregistrement. Par conséquent, le code d'identification de chaque terminal n'est pas connu de l'utilisateur du terminal, ce qui empêche qu'un même utilisateur ne se connecte plusieurs fois en réutilisant le même code d'identification. Il est alors possible d'assurer l'unicité de la connexion sans utiliser de serveur RADIUS.

Conformément à l'invention et comme illustré à la figure 2, un terminal T1 préalablement enregistré désire se connecter à une entité serveur S. Pour cela, le module de connexion 1 du terminal T1 rassemble les données de caractéristiques matérielles intrinsèques de ce terminal, et génère un code d'identification. Puis, le module de connexion 1 envoie des données d'authentification comportant le code d'identification et un secret à une entité serveur. Si ce secret est un mot de passe, le module de connexion 1 peut le demander à l'utilisateur. Si, en revanche, il s'agit d'une clef d'un système de cryptographie symétrique ou asymétrique, le module de connexion 1 envoie cette clef à l'instar du secret.

Ensuite, l'entité serveur vérifie dans sa mémoire que le code d'identification reçu a bien été enregistré préalablement. Enfin, le secret est vérifié pour valider la connexion. Si le secret est valide et que le code d'identification correspond à un utilisateur enregistré, l'entité serveur S autorisera l'accès. Si, en revanche, le code d'identification est inconnu, ou le secret n'est pas valide, l'entité serveur S enverra un message d'erreur au module de connexion 1 qui peut le cas échéant tenter une nouvelle connexion en générant à nouveau un code d'identification.

Par conséquent, il est très difficile pour un utilisateur de connaître son propre code d'identification. Cela a pour avantage qu'un utilisateur ne peut se connecter qu'au moyen du module de connexion 1 installé sur son terminal. Cependant, un utilisateur mal intentionné pourrait tenter « d'écouter » les envois de données provenant du module de connexion 1. Ainsi, celui-ci pourrait réussir à obtenir de manière illicite la séquence de données d'identification d'un premier terminal, afin d'effectuer depuis un autre terminal l'envoi d'un code d'identification d'un kit de connexion, faisant ainsi croire à une tentative de connexion du premier terminal.

Afin d'éviter ce type d'utilisation frauduleuse, et selon une variante de la présente invention, le module de connexion 1 peut envoyer de plus une information d'horodatage dans le code d'identification du terminal. Ainsi, à la réception du code d'identification du terminal, une entité serveur vérifiera, en plus des vérifications déjà décrites, que l'information d'horodatage est sensiblement exacte. L'entité serveur peut accorder cependant une erreur sur l'information d'horodatage, cette erreur devant être comprise dans un seuil de tolérance.

Ainsi, les données d'authentification varient en fonction de l'heure et de la date de la demande de connexion. Par conséquent, une simple écoute des données de transmission provenant du module de connexion 1 ne suffit pas à générer un code d'identification puisqu'il faut de plus inclure l'information d'horodatage. Cette information d'horodatage peut être incluse de manière cryptée, ce qui empêche un utilisateur mal intentionné d'effectuer une demande de connexion valide, si celui-ci ignore les algorithmes de calcul du code d'identification.

Selon un mode de réalisation, le module de connexion 1 peut envoyer avec les données d'identification un code de sécurité, qui peut être par exemple calculé par une opération sur :
- une information d'horodatage et
- les données des caractéristiques matérielles du terminal ou le résultat d'un MAC (Message Authentification Code). Ce type de MAC emploie une clef secrète qui peut être par exemple déposée par l'entité d'enregistrement lors de l'étape d'enregistrement. Ainsi, lors des vérifications de l'entité serveur, il sera vérifié que l'information d'horodatage est correcte et que le résultat du MAC avec cette information d'horodatage redonne bien le résultat transmis.

De cette manière, un utilisateur mal intentionné ne pourra pas, à partir d'une écoute des données de transmission d'un module de connexion 1, générer un code d'identification qu'il pourra réutiliser.

Dans le cas où l'utilisateur a souscrit à un abonnement qui comporte certaines restrictions, comme par exemple la possibilité de ne se connecter qu'entre certaines heures de la journée, ou encore pouvoir bénéficier d'une liaison ADSL en permanence et en WiFi uniquement durant la nuit, le module de connexion 1 peut ajouter une donnée comprenant ces restrictions dans les données d'identification.

Ainsi, lorsque une entité serveur vérifie les données d'authentification, celui-ci s'assurera que ces restrictions d'abonnement sont bien compatibles avec les restrictions effectives concernant l'utilisateur.

Ainsi, un utilisateur mal intentionné ne peut changer les clauses de son abonnement de manière frauduleuse, puisque, si ces clauses d'abonnement envoyées avec le code d'authentification ne sont pas conformes, sa connexion sera refusée.

Selon un mode de réalisation, le module de connexion est un logiciel installé sur un terminal. De même, l'entité d'enregistrement E comprend des moyens logiciels pour mettre en oeuvre le procédé d'enregistrement d'un terminal. Par conséquent, un tel procédé d'authentification permet d'assurer l'unicité de la connexion d'un terminal sans pour autant requérir une installation lourde et coûteuse.

## Revendications

1. Procédé d'authentification d'un terminal pour valider une connexion du terminal (T1, T) à une entité serveur (S),
dans lequel un module de connexion (1) compris dans le terminal (T1,T) transmet des données d'authentification générées à l'aide d'au moins un code d'identification du terminal et d'un secret,
**caractérisé en ce que** le module de connexion (1) établit le code d'identification sur la base de données de caractéristiques matérielles intrinsèques propres au terminal (T1,T),
et **en ce que**, la connexion étant sujette à des clauses d'abonnement, le code d'identification comprend en outre une information sur les clauses de l'abonnement.

2. Procédé selon la revendication 1, suivant lequel le module de connexion (1) inclut en outre une information d'horodatage dans le code d'identification du terminal (T1,T).

3. Procédé selon la revendication 2, suivant lequel le module de connexion (1) inclut en outre dans le code d'identification le résultat crypté d'une opération sur :
- les données des caractéristiques matérielles intrinsèques propres au terminal (T1,T) ;
- et l'information d'horodatage.

4. Procédé d'enregistrement d'un terminal, pour autoriser la connexion dudit terminal (T1,T) à au moins une entité serveur (S), dans lequel le terminal (T) comprend un module de connexion (1), **caractérisé en ce que** ledit module de connexion (1) du terminal (T1,T) fournit à une entité d'enregistrement (E) des données sur les caractéristiques matérielles intrinsèques propres audit terminal (T1,T), et **en ce que** l'entité d'enregistrement (E) fournit à l'entité serveur (S) un code d'authentification du terminal (T1,T) comprenant un secret et un code d'identification du terminal (T1,T) établi sur la base desdites données de caractéristiques matérielles intrinsèques.

5. Procédé selon l'une quelconque des revendications précédentes, suivant lequel le code d'identification du terminal (T1,T) est établi à partir du résultat d'une fonction de condensation appliquée aux données de caractéristiques matérielles du terminal (T1,T).

6. Procédé selon l'une quelconque des revendications précédentes, suivant lequel on utilise comme secret au moins l'un des éléments suivants : un mot de passe entré par un utilisateur, une clef secrète d'un système de cryptographie symétrique, une clef publique d'un système de cryptographie asymétrique.

7. Module de connexion pour un terminal apte à se connecter à une entité serveur (S), comprenant des moyens adaptés à la mise en oeuvre d'un procédé selon l'une quelconque des revendications 1 à 3.

8. Produit programme d'ordinateur comprenant un code dont l'exécution permet de former sur un ordinateur un module de connexion (1) selon la revendication 7.

9. Entité d'enregistrement (E) pour enregistrer un terminal (T1,T) dans un réseau, comprenant des moyens d'enregistrement adaptés à la mise en oeuvre d'un procédé selon l'une quelconque des revendications 4 à 6.

10. Produit programme d'ordinateur comprenant un code dont l'exécution permet de former sur un ordinateur les moyens d'enregistrement pour une entité d'enregistrement (E) selon la revendication 9.
